Europäisches Patentamt

European Patent Office

Office européen des brevets

(11) Veröffentlichungsnummer: **0 492 085 A2**

# EUROPÄISCHE PATENTANMELDUNG

(21) Anmeldenummer: **91118485.1**

(51) Int. Cl.⁵: **G02B 6/38**

(22) Anmeldetag: **30.10.91**

(30) Priorität: **24.12.90 DE 9017440 U**

(43) Veröffentlichungstag der Anmeldung:
**01.07.92 Patentblatt 92/27**

(84) Benannte Vertragsstaaten:
**DE FR GB GR**

(71) Anmelder: **ATLAS ELEKTRONIK GmbH**
**Sebaldsbrücker Heerstrasse 235**
**W-2800 Bremen 1(DE)**

(72) Erfinder: **Brenner, Axel, Dipl.-Ing.**
**Ammerländer Strasse 4**
**W-2800 Bremen 66(DE)**
Erfinder: **Lehmann, Uwe, Dipl.-Ing.**
**Osterfeuerweg 8**
**W-2807 Achim(DE)**
Erfinder: **Die anderen Erfinder haben auf ihre Nennung verzichtet**

(54) **Mehrpoliger Verbindungsstecker für Lichtleiterkabel.**

(57) Ein mehrpoliger Verbindungsstecker zum Anschließen eines mehradrigen Lichtleiterkabels (12) weist ein Steckergehäuse (15) mit Kabelöffnung (27) und einen in das Steckergehäuse (15) einsteckbaren Steckereinsatz (13) mit einer Mehrzahl von an den Aderenden der Kabeladern (11) anzuschließenden Steckbuchsen oder -stiften auf. Zur zeitersparenden Montage bei der Verbindung von Steckbuchsen oder -stiften mit den Kabeladern (11) auch bei Abbrechen des einen oder anderen Aderendes der Kabeladern (11) ist im Steckergehäuse (15) ein Hohlraum (34) zur Aufnahme von Überschußlängen der einzelnen Kabeladern (11) vorgesehen.

Fig. 1

Die Erfindung betrifft einen mehrpoligen Verbindungsstecker zum Anschließen eines mehradrigen Lichtleiterkabels der im Oberbegriff des Anspruchs 1 definierten Gattung.

Solche Verbindungsstecker werden z.B. bei Sonaranlagen verwendet, um aus einer unter Wasser befindlichen Vorverarbeitungseinheit Signale zu einer land- oder schiffsgestützten Verarbeitungszentrale zu übertragen. Während es problemlos ist, einen einzigen Lichtleiter mit einem einpoligen Stecker zu versehen, treten bei der Montage von mehradrigen Lichtleiterkabeln an mehrpoligen Steckern erhebliche Schwierigkeiten auf, wenn - wie nicht auszuschließen ist - bei der einen oder anderen Kabelader eine Fehlkonfektionierung erfolgt. In diesem Fall muß das gesamte Lichtleiterkabel gekürzt werden, und zwar auch die Kabeladern, die bereits mit Steckbuchsen oder Steckstiften ordnungsgemäß versehen worden sind. Dieses bedeutet einen unerträglich hohen Zeitaufwand bei der Montage.

Der Erfindung liegt die Aufgabe zugrunde, einen mehrpoligen Verbindungsstecker der eingangs genannten Art zu schaffen, der zeitsparend an ein mehradriges Lichtleiterkabel mit beliebiger Aderzahl angeschlossen werden kann, auch dann noch, wenn ein Bruch einer oder mehrerer Kabeladern am Aderende bei der Montage auftritt.

Die Aufgabe ist bei einem mehrpoligen Verbindungsstecker der im Oberbegriff des Anspruchs 1 definierten Gattung erfindungsgemäß durch die Merkmale im Kennzeichenteil des Anspruchs 1 gelöst.

Der erfindungsgemäße mehrpolige Verbindungsstecker hat den Vorteil, daß im Falle des Abbrechens eines Aderendes die Ader mit verkürzter Länge mit der Steckbuchse oder dem Steckstift verbunden werden kann und die übrigen Kabeladern nicht verändert werden müssen. Infolge der verkürzten einen Kabelader weisen die übrigen Kabeladern für den zwischen Kabelöffnung und Steckereinsatz zu überbrückenden Leitungsweg zwar erhebliche Überlängen auf, die aber nunmehr ohne Schwierigkeiten in den erfindungsgemäß vorgesehenen Hohlraum im Steckergehäuse untergebracht werden können.

Zweckmäßige Ausführungsformen des erfindungsgemäßen mehrpoligen Verbindungssteckers mit vorteilhaften Weiterbildungen und Ausgestaltungen der Erfindung ergeben sich aus den weiteren Ansprüchen.

Gemäß einer bevorzugten Ausführungsform der Erfindung werden Überlängen von Kabeladern nicht lose in den Hohlraum eingelegt, sondern auf einen Aufwickelkörper aufgewickelt, der problemlos alle überschüssigen Längen der Kabeladern unter Einhaltung des minimal zulässigen Biegeradius der Kabeladern aufnimmt. Der bewickelte Aufwickelkörper wird danach in den Hohlraum eingesetzt.

Hierzu ist gemäß einer weiteren Ausführungsform der Erfindung das Steckergehäuse zweiteilig mit einem die Kabelöffnung aufweisenden Topfteil und einem einen Aufnahmestutzen für den Steckereinsatz tragenden Deckelteil ausgeführt, der mit einem Ringsteg im Topfteil geführt ist und mit einem radial über dem Ringsteg vorstehenden Ringflansch auf dem Topfrand des Topfteils aufliegt. Der Ringflansch wird nach erfolgter Montage am Topfrand verschraubt.

In einer weiteren Ausführungsform der Erfindung ist der Wickelkörper als scheibenartiger Spulenkörper ausgebildet, der eine Umfangsnut zum Einlegen der Überschußlängen der Kabeladern aufweist, wobei der Radius des Nutgrundes größer ist als der minimal zulässige Biegeradius der Kabeladern. Der Außendurchmesser des Spulenkörpers ist wenig kleiner als der Innendurchmesser des Topfteils. Der Spulenkörper ist in dem Hohlraum derart eingesetzt, daß seine Körperachse quer zu den Achsen von Kabelöffnung und Steckereinsatz ausgerichtet ist und die Nutmitte der Umfangsnut mit den Achsen von Kabelöffnung und Steckereinsatz etwa in einer Ebene liegt. Am Ringsteg des Deckelteils sind zwei stirnseitige, diametrale Ausnehmungen vorgesehen, die den Spulenkörper umgreifen und damit im Hohlraum fixieren. Außerdem stützt sich der Spulenkörper mit seinem Umfang an einem am Boden des Topfteils befestigten Gummiring in zwei Anlagepunkten ab.

Die Erfindung ist anhand eines in der Zeichnung dargestellten Ausführungsbeispiels nachfolgend näher beschrieben. Es zeigen:

Fig. 1  eine Seitenansicht eines mehrpoligen Verbindungssteckers mit angeschlossenem, mehradrigen Lichtleiterkabel, teilweise geschnitten,

Fig. 2  eine Draufsicht des Spulenkörpers im Verbindungsstecker gemäß Fig. 1,

Fig. 3  einen Schnitt längs der Linie III-III in Fig. 2,

Fig. 4  eine Explosionszeichnung des Steckergehäuses des Verbindungssteckers in Fig. 1, perspektivisch dargestellt.

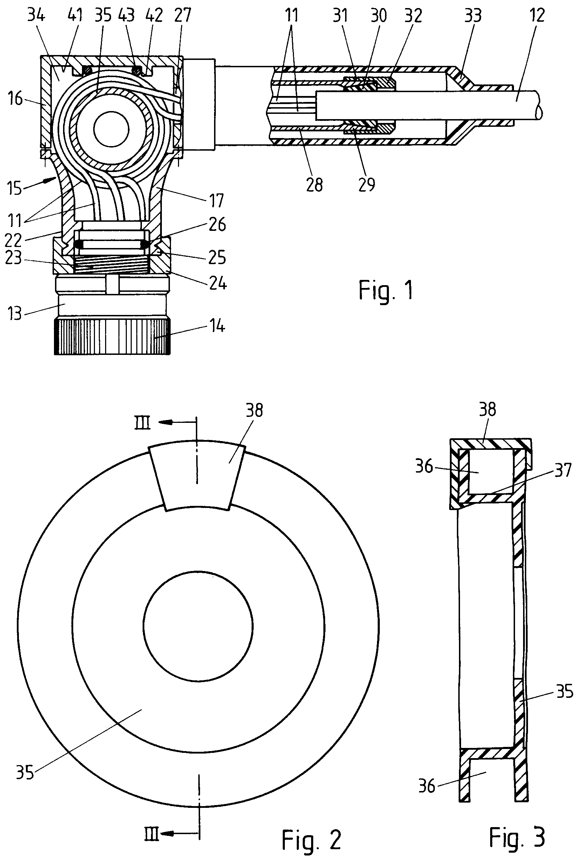

Der in Fig. 1 teilweise im Längsschnitt zu sehende mehrpolige Verbindungsstecker ist in seinem endmontierten Zustand dargestellt, in welchem bereits die einzelnen Kabeladern 11 eines Lichtleiterkabels 12 mit hier nicht zu sehenden Steckbuchsen verbunden sind. Die Steckbuchsen sind in paralleler Ausrichtung in einem Steckereinsatz 13 angeordnet, der mittels einer Überwurfmutter 14 mit dem Gegenstecker verbunden wird, wobei Steckstifte des Gegensteckers die Steckbuchsen im Steckereinsatz 13 kontaktieren.

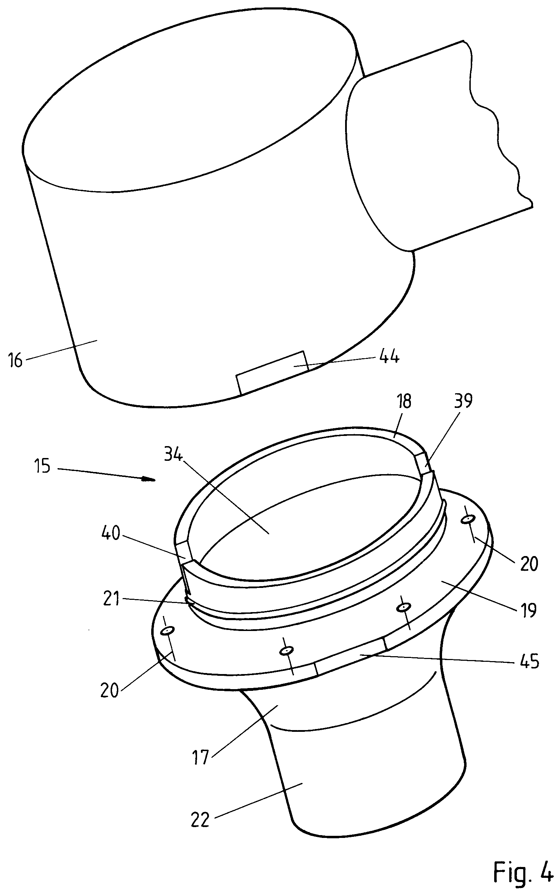

Der Verbindungsstecker weist ein zweiteiliges Gehäuse 15 auf, das aus einem Topfteil 16 und aus einem Deckelteil 17 besteht (vgl. auch Fig. 4). Der Deckelteil 17 ist mit einem Ringsteg 18 im Topfteil 16 geführt und trägt einen radial überstehenden Ringflansch 19, der auf dem Topfrand des Topfteils 16 aufliegt und mittels durch 20 angedeuteter Schrauben, die in entsprechenden Gewindebohrungen im Topfteil 16 verschraubt werden, am Topfteil 16 befestigt werden kann. Zur flüssigkeitsdichten Abdichtung zwischen Deckelteil 17 und Topfteil 16 ist ein O-Ring 21 in einer umlaufenden Ringnut im Ringsteg 18 eingelegt. Am Deckelteil 17 ist einstückig ein Aufnahmestutzen 22 zur Aufnahme des Steckereinsatzes 13 ausgebildet. Zur Befestigung des Steckereinsatzes 13 im Aufnahmestutzen 22 besitzt ersterer einen Außengewindeabschnitt 23, auf dem eine Überwurfmutter 24 aufgeschraubt wird, die eine am Aufnahmestutzen 22 ausgebildete Spannschulter 25 hintergreift. Zur Abdichtung trägt der Steckereinsatz 13 einen O-Ring 26, der nach Einschieben des Steckereinsatzes 13 in den Aufnahmestutzen 22 an dessen Innenwand anliegt.

Der Topfteil 16 weist eine Öffnung 27 zum Durchführen des Lichtleiterkabels 12 auf, deren Achse rechtwinklig zur Achse des Deckelteils 17 bzw. des Aufnahmestutzens 22 bzw. des Steckereinsatzes 13 verläuft. Die Kabelöffnung 27 wird von einem Kabelrohr 28 umschlossen, das radial vom Topfteil 16 absteht und dessen Innenwand an dem freien Rohrende in einem sich nach außen aufweitenden Konus 29 ausläuft. In den Konus 29 ist ein konisches Klemmstück 30 aus Kunststoff eingesteckt, das von einer auf das Ende des Kabelrohrs 28 aufgeschraubten Muffe 31 mit stirnseitigem Übergreifungsrand 32 axial unverschiebbar im Kabelrohr 28 gehalten wird. Das Klemmstück 30 weist mindestens eine Durchgangsbohrung auf, durch welche ein Lichtleiterkabel 12 paßgenau hindurchgezogen ist. Das Lichtleiterkabel 12 besteht in bekannter Weise aus einem Bündel von Lichtleiterfasern, den Kabeladern 11, die von einer gemeinsamen Hülle umgeben sind. Auf das Kabelrohr 28 ist noch eine das Lichtleiterkabel 12 umschließende Gummimanschette 33 aufgeschoben.

Topfteil 16 und Deckelteil 17 des Gehäuses 15 schließen einen Hohlraum 34 ein, in dem ein scheibenartiger Spulenkörper 35 eingesetzt ist. Der Spulenkörper 35 ist in Fig. 2 und 3 vergrößert dargestellt. Er trägt eine im Querschnitt etwa U-förmige Umfangsnut 36, in welche die einzelnen Kabeladern 11 des Lichtleiterkabels 12 eingelegt werden können. Der Radius des Nutgrundes 37 der Umfangsnut 36 ist dabei größer gewählt als der minimal zulässige Biegeradius der Kabeladern 11. Auf den Spulenkörper 35 kann ein Clipsbügel 38 so aufgeclipst werden, daß er einen Nutabschnitt der Umfangsnut 36 überspannt und damit die Kabeladern 11 in der Umfangsnut 36 fixiert. Selbstverständlich können mehrere Clipsbügel 38 vorgesehen werden. Der im Durchmesser wenig kleiner als der Durchmesser des Topfteils 16 ausgebildete Spulenkörper 35 ist so in den Hohlraum 34 eingesetzt, daß einerseits seine Körperachse rechtwinklig zu den Achsen von Kabelöffnung 27 und Steckereinsatz 13 ausgerichtet ist und andererseits die Nutmitte der Umfangsnut 36 in einer Ebene mit den Achsen von Kabelöffnung 27 und Steckereinsatz 13 liegt. Zur Halterung des Spulenkörpers 35 trägt der Ringsteg 18 des Deckelteils 17 zwei diametral angeordnete Ausnehmungen 39, 40, die vom Ringstegrand ausgehen und bis nahe zu dem O-Ring 21 reichen. Die Breite dieser Ausnehmungen 39, 40 ist geringfügig größer als die axiale Breite des Spulenkörpers 35, so daß letzterer in den beiden Ausnehmungen 39, 40 mit einer gewissen Klemmwirkung gehalten wird. Am Boden 41 des Topfteils 16 ist ein koaxialer Ringsteg 42 mit dem Boden 41 einstückig ausgebildet, an dessen innerer Wandung sich ein O-Ring 43 andrückt. Bei in dem Hohlraum 34 einliegendem Spulenkörper 35 wird der Spulenkörper 35 von dem Deckelteil 17 mit seinem Umfang in zwei Anlagestellen gegen diesen O-Ring 43 gedrückt. Zur Sicherstellung der beschriebenen Lage des Spulenkörpers 35 im Hohlraum 34 sind am Topfteil 16 und am Deckelteil 17 zwei Marken 44, 45 in Relation zu den Ausnehmungen 39, 40 und der Kabelöffnung 27 so angebracht, daß, wenn sie miteinander fluchten, durch die den Spulenkörper 35 haltenden Ausnehmungen 39, 40 dessen gewünschte Ausrichtung im Hohlraum 34 sichergestellt ist. Die Marken 44, 45 sind hier als Abflachungen am Ringflansch 19 und am Umfang des Topfteils 16 ausgebildet.

Die Montage des Verbindungssteckers an das Lichtleiterkabel 12 wird wie folgt durchgeführt:

Zunächst wird die Gummimanschette 33 auf das Lichtleiterkabel 12 aufgeschoben und dieses mit seiner Hülle durch die Bohrung im Klemmstück 30 hindurchgeschoben. Die freigelegten Kabeladern 11 werden durch das Kabelrohr 28 und die Kabelöffnung 27 hindurchgezogen und treten bei geöffnetem Gehäuse 15 (vom Topfteil 16 abgenommenen Deckelteil 17) in ausreichender Länge aus dem Hohlraum 34 hervor. Nach Hindurchführen durch den Topfteil 16 werden die Enden der einzelnen Kabeladern 11 mit den Buchsen im Steckereinsatz 13 verbunden. Bricht bei der Montage das eine oder andere Ende einer Kabelader 11 ab, so wird die gekürzte Ader mit der Steckbuchse verbunden, ohne daß an den Verbindungen der übrigen Kabeladern 11 mit den Steckbuchsen manipuliert wird. Der Steckereinsatz 13 wird nunmehr in den Topfteil 16 eingesetzt und mit diesem durch die Überwurfmutter 24 flüssigkeitsdicht verschraubt. Durch die verkürzten Kabeladern 11 entstehende Überlängen der anderen Kabeladern 11 werden nunmehr auf den Spulenkörper 35, und zwar in die Umfangsnut 36, aufgewickelt. Für die einfachere Handhabung bei der nachfolgenden Montage wird ein oder werden mehrere Clipsbügel 38 auf den bewickelten Spulenkörper 35 aufgeclipst. Der Spulenkörper 35 wird nunmehr in die beiden Ausnehmungen 39, 40 im Ringsteg 18 des Deckelteils 17 eingeklemmt und in den Topfteil 16 eingeführt. Zur Sicherstellung der richtigen Lage des Spulenkörpers 35 im Hohlraum 34 ist dabei darauf zu achten, daß die Marken 44 und 45 am Topfteil 16 und Deckelteil 17 miteinander fluchten. Liegt der Ringflansch 19 des Deckelteils 17 auf dem Topfrand des Topfteils 16 auf, so stützt sich der Spulenkörper 35 an seinem Umfang an dem am Boden 41 des Topfteils 16 gehaltenen O-Ring 43 ab. Mittels der Schrauben 20 wird nunmehr der Deckelteil 17 am Topfteil 16 flüssigkeitsdicht verspannt. Danach wird das Klemmstück 30 in das Kabelrohr 28 eingesetzt und das Lichtleiterkabel 12 so weit zurückgezogen, daß das Klemmstück 30 gerade noch die Hülle des Lichtleiterkabels 12 umschließt (Fig. 1). Dann wird das Klemmstück 30 mittels der Muffe 31 im Kabelrohr 28 befestigt und die Gummimanschette 33 auf das Kabelrohr 28 aufgeschoben.

## Patentansprüche

1. Mehrpoliger Verbindungsstecker zum Anschließen eines mehradrigen Lichtleiterkabels mit einem Steckergehäuse, das eine Kabelöffnung zum Einführen des Lichtleiterkabels aufweist, und mit einem mit dem Steckergehäuse verbindbaren Steckereinsatz, der eine Mehrzahl von Steckbuchsen oder Steckstiften zum Anschließen an jeweils einer der Kabeladern aufweist, dadurch gekennzeichnet, daß im Steckergehäuse (15) zwischen Kabelöffnung (27) und Steckereinsatz (13) ein Hohlraum (34) zur Aufnahme von Überschußlängen der einzelnen Kabeladern (11) enthalten ist.

2. Stecker nach Anspruch 1, dadurch gekennzeichnet, daß im Hohlraum (34) ein Wickelkörper (35) zum Aufwickeln der Überschußlängen der einzelnen Kabeladern (11) einliegt.

3. Stecker nach Anspruch 2, dadurch gekennzeichnet, daß der Wickelkörper als scheibenartiger Spulenkörper (35) ausgebildet ist, der eine im Querschnitt etwa U-förmige Umfangsnut (36) zum Einlegen der Überschußlängen aufweist, und daß der Radius des Nutgrundes (37) größer ist als der minimal zulässige Biegeradius der Kabeladern (11).

4. Stecker nach Anspruch 3, dadurch gekennzeichnet, daß der Spulenkörper (35) in dem Hohlraum (34) derart gehalten ist, daß seine Körperachse quer zu den Achsen von Kabelöffnung (27) und Steckereinsatz (13) ausgerichtet und die Nutmitte der Umfangsnut (36) mit den Achsen von Kabelöffnung (27) und Steckereinsatz (13) etwa in einer Ebene liegt.

5. Stecker nach einem der Ansprüche 1 bis 4, dadurch gekennzeichnet, daß das Steckergehäuse (15) zweiteilig mit einem die Kabelöffnung (27) aufweisenden Topfteil (16) und einem einen Aufnahmestutzen (22) für den Steckereinsatz (13) aufweisenden Deckelteil (17) ausgeführt ist und daß der Deckelteil (17) mit einem Ringsteg (18) im Topfteil (16) geführt ist und mit einem radial über den Ringsteg (18) überstehenden Ringflansch (19) auf dem Topfrand des Topfteils (16) aufliegt.

6. Stecker nach Anspruch 5, dadurch gekennzeichnet, daß der Ringsteg (18) einen in einer umlaufenden Ringnut einliegenden O-Ring (21) zur flüssigkeitsdichten Abdichtung von Topf- und Deckelteil (16, 17) trägt.

7. Stecker nach Anspruch 5 oder 6, dadurch gekennzeichnet, daß der Außendurchmesser des Spulenkörpers (35) wenig kleiner als der Innendurchmesser des Topfteils (16) bemessen ist und daß im Ringsteg (18) des Deckelteils (17) zwei diametral angeordnete, vom Ringstegrand ausgehende Ausnehmungen (39, 40) zum Umgreifen des Spulenkörpers (35) eingebracht sind.

8. Stecker nach Anspruch 7, dadurch gekennzeichnet, daß am Boden (41) des Topfteils (16) ein O-Ring (43) befestigt ist, an dem sich der Spulenkörper (35) mit seinem Umfang in zwei Auflagepunkten abstützt.

9. Stecker nach einem der Ansprüche 3 bis 8, dadurch gekennzeichnet, daß auf dem Spulenkörper (35) mindestens ein die Nutöffnung in einem Nutabschnitt überspannender Clipsbügel (38) aufclipsbar ist.

10. Stecker nach einem der Ansprüche 5 bis 9, dadurch gekennzeichnet, daß der Ringflansch (19) des Deckelteils (17) am Topfrand des Topfteils (16) verschraubt ist.

Fig. 1

Fig. 2

Fig. 3

Fig. 4